# EUROPÄISCHE PATENTANMELDUNG

(11) **EP 4 606 829 A1**
(43) Veröffentlichungstag der Anmeldung: **27.08.2025**
(21) Anmeldenummer: 24159315.1
(22) Anmeldetag: 23.02.2024
(51) Int. Cl.: C08G 18/10, C08G 18/24, C08G 18/28, C08G 18/48, C08G 18/71, C08G 18/75, C09D 175/08, C09J 175/08

(54) **VERFAHREN ZUR HERSTELLUNG ALKOXYSILANFUNKTIONELLER POLYURETHANE UND POLYURETHANHARNSTOFFE**

(71) Anmelder: Covestro Deutschland AG, 51373 Leverkusen (DE)
(72) Erfinder: Laas, Hans-Josef, 51519 Odenthal (DE); Hillenbrandt, Klaus, 47441 Moers (DE); Jeske, Winfried, 51399 Burscheid (DE)
(74) Vertreter: Levpat

(57) **Zusammenfassung**

Die vorliegende Erfindung betrifft ein Verfahren zur Herstellung Alkoxysilangruppen enthaltender Polyurethane und/oder Polyurethanharnstoffe durch Umsetzung
A1) mindestens einer Alkoxysilangruppen-freien, mindestens eine Isocyanatgruppe enthaltenden Verbindung und/oder
B1) mindestens einer Alkoxysilangruppen-freien, mindestens ein Zerewitinoff-aktives H-Atom enthaltenden Verbindung
mit
A2) mindestens einer, mindestens eine Alkoxysilangruppe und mindestens eine NCO-Gruppe enthaltenden Verbindung und/oder
B2) mindestens einer, mindestens eine Alkoxysilangruppe und mindestens ein Zerewitinoff-aktives H-Atom enthaltenden Verbindung
in Anwesenheit von
C) Zusatzstoffe,
dadurch gekennzeichnet, dass C) Zinn(II)-chlorid als Katalysator enthält.

Des Weiteren betrifft die Erfindung die aus dem Verfahren erhaltenen Alkoxysilangruppen enthaltenden Polyurethane und deren Verwendung.

## Beschreibung

Die vorliegende Erfindung betrifft ein Verfahren zur Herstellung von Alkoxysilangruppen enthaltenden Polyurethanen und Polyurethanharnstoffen, sowie die aus dem Verfahren erhaltenen Alkoxysilangruppen enthaltenden Polyurethane und Polyurethanharnstoffe und die Verwendung dieser als Bindemittel.

Alkoxysilanfunktionelle (d. h. Alkoxysilangruppen enthaltende) Polyurethane und Polyurethanharnstoffe, die über eine Silanpolykondensation vernetzen, sind lange bekannt. Sie kommen als feuchtigkeitshärtende Einkomponentensysteme bei der Formulierung von Dichtstoffen, Klebstoffen und Beschichtungsmitteln, beispielsweise in Bauanwendungen oder der Automobilindustrie zum Einsatz.

Zur Herstellung alkoxysilanfunktioneller Polyurethane und Polyurethanharnstoffe, im Folgenden auch silanterminierte Polyurethane genannt, sind verschiedene Synthesewege bekannt.

Ein häufig beschriebenes Verfahren ist die Umsetzung hydroxyfunktioneller Verbindungen mit isocyanatfunktionellen Alkoxysilanen.

Die EP-A 0 070 475 beschreibt beispielsweise die Umsetzung Isocyanatgruppen enthaltender Alkoxysilane mit hydroxyfunktionellen Prepolymeren in Gegenwart von Dibutylzinndilaurat (DBTL) als Katalysator.

Auch nach den Lehren der EP-A 0 931 800 und WO 2009/071548 lassen sich hydroxyfunktionelle Polyurethanprepolymere, die durch Umsetzung von Diisocyanaten mit überschüssigen Mengen an Diolen erhalten wurden, mit Isocyanatosilanen zu silanterminierten Polyurethanen umsetzen. Als Katalysatoren dienen auch bei diesen Verfahren vorzugsweise zinnhaltige Verbindungen, wie insbesondere DBTL.

Die EP-A 1 924 621, WO 99/55794 und WO 2012/168234 beschreiben alkoxysilanterminierte Polyurethane, die durch DBTL-katalysierte Umsetzung von Polyetherpolyolen unterschiedlichen Molekulargewichts mit Isocyanatoalkylalkoxysilanen hergestellt werden.

Ein weiterer lange bekannter Syntheseweg zur Herstellung silanterminierter Polyurethane besteht in der Umsetzung isocyanatfunktioneller Prepolymere mit aminofunktionellen Alkoxysilanen.

Die EP-A 1 093 482 und US 3 632 557 beschreiben beispielsweise die Umsetzung von Polyetherpolyolen mit einem molaren Überschuss an Diisocyanaten zu Polyurethanen mit endständigen Isocyanatgruppen und deren Reaktion mit primären Aminosilanen, wie z. B. 3-Aminopropyltrimethoxysilan, zu alkoxysilanfunktionellen Polyurethanharnstoffen.

Gegenstand der US 3 627 722 ist ein ähnliches Verfahren, bei dem sekundäre Aminosilane, wie z. B. N-Methylaminopropyltrimethoxysilan, mit Isocyanatprepolymeren zur Reaktion gebracht werden.

Bei den in der WO 2011/023691 und WO 2011/069968 beschriebenen Verfahren dienen silanfunktionelle Asparaginsäureester, wie z. B. der aus der EP-A 0 596 360 bekannte N-(3-Trimethoxysilylpropyl)asparaginsaurediethylester, als Reaktionspartner für isocyanatfunktionelle Polyurethanprepolymere.

Sämtliche Verfahren zur Herstellung alkoxysilanfunktioneller Polyurethanharnstoffe unter Verwendung von Aminosilanen haben allerdings den Nachteil, dass die Verfahrensprodukte aufgrund der bei ihrer Herstellung entstehenden Harnstoffgruppen sehr hohe Viskositäten aufweisen, was ihre Verarbeitbarkeit erheblich erschwert.

Dieser Nachteil lässt sich teilweise umgehen, indem man die beiden vorstehend beschriebenen Synthesewege zu einem Hybridverfahren kombiniert, bei dem ein Polyol mit einem Diisocyanat, einem Isocyanatosilan und einem Aminosilan umgesetzt werden. Solche Verfahren zur Herstellung gemischter silanterminierter Polyurethanharnstoffe mit reduzierter Viskosität sind beispielsweise in AU 2015100195, WO 2019/122174 und WO 2020/239663 offenbart.

Den vorstehend beschriebenen Verfahren zur Herstellung silanterminierter Polyurethane unter Verwendung isocyanatfunktioneller Alkoxysilane ist allerdings allesamt gemeinsam, dass die Reaktionszeiten möglichst kurz sein müssen, um mögliche Umesterungsreaktionen zwischen gleichzeitig im Reaktionsgemisch vorliegenden Alkoxysilangruppen und Hydroxylgruppen des eingesetzten Polyols zu unterbinden oder zumindest zu minimieren.

Bei der Mehrzahl der genannten Verfahren kommen hierfür aus der Polyurethanchemie als hochwirksame Urethanisierungskatalysatoren bekannte Organozinn-Verbindungen, wie Dialkylzinndialkoxide und -dialkanoate, insbesondere DBTL, zum Einsatz. Aufgrund ihres ungünstigen toxikologischen Profils, insbesondere ihrer Reproduktionstoxizität und Mutagenität, stehen zinnorganischen Verbindungen allerdings zunehmend in der Kritik.

Es hat daher nicht an Versuchen gefehlt, für die Herstellung silanterminierter Polyurethane geeignete alternative, nicht-toxische Katalysatoren zu finden.

EP-A 1 535 940 beschreibt beispielsweise ein Verfahren zur Herstellung von silanterminierten Polyetherurethanen, bei dem langkettige Polyetherpolyole mit Isocyanatoalkylalkoxysilanen in Gegenwart von Bismut- und Zink-Katalysatoren, wie beispielsweise Bismutneodecanoat oder Zink-2-ethylhexanoat, umgesetzt werden. Die katalytische Aktivität von Bismut- und Zink-Katalysatoren ist allerdings deutlich niedriger als von Organozinn-Verbindungen, weshalb höhere Katalysatorkonzentrationen eingesetzt werden müssen. Dies kann in der Praxis aber die Lagerstabilität der silanterminierten Polyurethane negativ beeinflussen.

Bismut-Katalysatoren weisen darüber hinaus den generellen Nachteil auf, dass sie sich bei längerer Lagerung und insbesondere unter Tageslichteinfluss zersetzen und häufig zu einer Braunfärbung oder sogar Ausfällung von schwarzen Partikeln im Produkt führen (D. Guhl, FAPU 49, 30-33 (2008), DOI: 10-1386-08-EPJ-2-2008-d.indd). WO 2018/113937 beschreibt diesen Effekt für silanterminierte Prepolymere.

Auch die in WO 2009/133061 und WO 2009/133062 zur Herstellung von silanterminierten Polymeren als geeignete Katalysatoren beschriebenen Kalium-, Eisen-, Indium-, Zink-, Bismut- und Kupferverbindungen, beispielsweise Kaliumneodecanoat, Indiumneooctoat, Kupfernaphtenat oder Eisennaphthenat, zeigen keine ausreichende, Organozinn-Katalysatoren vergleichbare Aktivität und führen zum Teil ebenfalls zu Verfärbungen im Produkt.

WO 2019/121239 beschreibt die Verwendung spezieller themolatenter Zinnkatalysatoren zur Herstellung Alkoxysilangruppen enthaltender Polyurethane. Diese Katalysatoren enthalten anorganisch gebundenes Zinn und sind damit aus toxikologischer Sicht weitgehend unbedenklich. Ihre katalytische Aktivität ist jedoch deutlich geringer als die von DBTL, was den Einsatz sehr hoher Katalysatorkonzentrationen erforderlich macht. Ein zusätzlicher Nachteil der thermolatenten Katalysatoren der WO 2019/121239 ist ihre geringe Löslichkeit in üblichen Lösemittel, was ihren Einsatz in der Praxis erschwert.

Den Nachteil der sehr geringen Löslichkeit weisen auch die in WO 2019/121351 als Katalysatoren vorgeschlagenen Lanthanoid-Komplexe mit β-Diketonliganden, wie z. B. Ytterbium(III)acetylacetonat, auf.

Die Katalyse der Urethanisierungsreaktionen bei der Herstellung silanterminierter Polyurethane ist nach wie vor nicht zufriedenstellend gelöst. Es bestand daher ein Bedarf an einem Organozinn-freien Katalysator, der mindestens die gleiche Aktivität, bevorzugt eine erhöhte Aktivität, aufweist wie die zurzeit in der Praxis eingesetzten Organozinnkatalysatoren, wie insbesondere DBTL, und keinen negativen Einfluss auf die Viskosität, Stabilität, Farbe und Verarbeitbarkeit des Produkts hat.

Wie jetzt überraschend gefunden wurde, eignet sich die anorganische Zinnverbindung Zinn(II)-chlorid hervorragend als Katalysator zur Herstellung Alkoxysilangruppen enthaltender Polyurethane und/oder Polyurethanharnstoffe. Die Verwendung bereits sehr geringer Mengen an Zinn(II)-chlorid als Katalysator liefert in kurzen Reaktionszeiten und bei niedrigen Temperaturen farbhelle Produkte, die solchen, die unter DBTL-Katalyse hergestellt wurden bezüglich Lagerstabilität, Viskosität und Verarbeitbarkeit in nichts nachstehen.

Gegenstand der vorliegenden Erfindung ist ein Verfahren zur Herstellung Alkoxysilangruppen enthaltender Polyurethane und/oder Polyurethanharnstoffe durch Umsetzung
A1) mindestens einer Alkoxysilangruppen-freien, mindestens eine Isocyanatgruppe enthaltenden Verbindung und/oder
B1) mindestens einer Alkoxysilangruppen-freien, mindestens ein Zerewitinoff-aktives H-Atom enthaltenden Verbindung
   mit
A2) mindestens einer, mindestens eine Alkoxysilangruppe und mindestens eine NCO-Gruppe enthaltenden Verbindung und/oder
B2) mindestens einer, mindestens eine Alkoxysilangruppe und mindestens ein Zerewitinoff-aktives H-Atom enthaltenden Verbindung
   in Anwesenheit von
C) Zusatzstoffen,
   dadurch gekennzeichnet, dass C) Zinn(II)-chlorid als Katalysator enthält.

Gegenstand sind auch die nach diesem Verfahren erhältlichen Alkoxysilangruppen enthaltenden Polyurethane und/oder Polyurethanharnstoffe sowie deren Verwendung als Bindemittel für Lack-, Dichtstoff- oder Klebstoffrohstoffe.

Geeignete Ausgangsverbindungen A1) für das erfindungsgemäße Verfahren sind Alkoxysilangruppen-freie Verbindungen, die mindestens eine NCO-Gruppe aufweisen. Hierbei handelt es sich beispielsweise um Diisocyanate mit aliphatisch, cycloaliphatisch, araliphatisch und/oder aromatisch gebundenen Isocyanatgruppen, die auf verschiedene Weise, beispielsweise durch Phosgenierung der korrespondierenden Diamine in der Flüssig- oder Gasphase oder auf phosgenfreien Weg, wie z. B. durch thermische Urethanspaltung, erhältlich sind. Geeignete Diisocyanate A1) sind insbesondere solche des Molekulargewichtsbereichs 140 g/mol bis 400 g/mol, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-lsocyanato-1-methyl-4(3)isocyanatomethylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Geeignete Ausgangsverbindungen A1) sind auch durch Modifizierung dieser Diisocyanate erhältlichen Polyisocyanate mit Uretdion-, Isocyanurat-, Iminooxadiazindion-, Urethan-, Allophanat-, Biuret- und/oder Oxadiazintrionstruktur.

Bevorzugte Alkoxysilangruppen-freie Ausgangskomponenten A1) sind die genannten Diisocyanate, besonders bevorzugt solche mit aliphatisch und/oder cycloaliphatisch gebundenen Isocyanatgruppen und ganz besonders bevorzugt 1,5-Diisocyanatopentan, 1,6-Diisocyanatohexan, 1-Isocyanato-3,3,5-trimethyl-5-isocyanatomethylcyclohexan, 2,4'- und/oder 4,4`-Diisocyanatodicyclohexylmethan.

Geeignete Ausgangsverbindungen A2) für das erfindungsgemäße Verfahren sind beliebige Verbindungen, in denen gleichzeitig nebeneinander mindestens eine, vorzugsweise genau eine, Isocyanatgruppe und mindestens eine, vorzugsweise genau eine, Silangruppe mit mindestens einem Alkoxysubstituenten vorliegen. Im Folgenden werden diese Isocyanatosilane auch als Alkoxysilan-funktionelle Isocyanate oder als Isocyanatoalkoxysilane bezeichnet.

Als Ausgangsverbindungen A2) geeignete Isocyanatoalkoxysilane sind beispielsweise solche, wie sie z. B. nach den in US-B 3 494 951, EP-A 0 649 850, WO 2014/063 895 und WO 2016/010 900 beschriebenen Verfahren auf phosgenfreiem Weg durch thermische Spaltung der korrespondierenden Carbamate oder Harnstoffe zugänglich sind.

Bevorzugt kommen als Alkoxysilan-funktionelles Isocyanat beim erfindungsgemäßen Verfahren mindestens eine Verbindung der allgemeinen Formel (I) 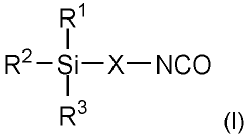 zum Einsatz,
in welcher
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Hetero-atome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
- X: für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht.

Beispiele für derartige Isocyanatoalkoxysilane sind Isocyanatomethyltrimethoxysilan, Isocyanatomethylmethyldimethoxysilan, Isocyanatomethyltriethoxysilan, Isocyanatomethylmethyldiethoxysilan, Isocyanatomethyltriisopropoxysilan, 2-Isocyanatoethyltrimethoxysilan, 2-Isocyanatoethyltriethoxysilan, 2-Isocyanatoethyltriisopropoxysilan, 3-Isocyanatopropyltrimethoxysilan, 3-Isocyanatopropyl-triethoxysilan, 3-Isocyanatopropylmethyl-dimethoxysilan, 3-Isocyanatopropyl-methyldiethoxysilan, 3-Isocyanatopropylethyldiethoxysilan, 3-Isocyanatopropyldimethylethoxysilan, 3-Isocyanatopropyldiisopropylethoxysilan, 3-Isocyanatopropyltripropoxysilan, 3-Isocyanatopropyltriisopropoxysilan, 3-Isocyanatopropyl-tributoxysilan, 3-Isocyanatopropylmethyldibutoxysilan, 3-Isocyanatopropylphenyldime-thoxysilan, 3-Isocyanatopropylphenyldiethoxysilan, 3-Isocyanatopropyltris(methoxyethoxy-ethoxy)silan, 2-Isocyanatoisopropyltrimethoxysilan, 4-Isocyanatobutyltrimethoxysilan, 4-Iso-cyanatobutyltriethoxysilan, 4-Isocyanatobutyltriisopropoxysilane, 4-Isocyanatobutyl-methyldimethoxysilan, 4-Isocyanatobutylmethyldiethoxysilan, 4-Isocyanatobutylethyldimethoxysilan, 4-Isocyanatobutylethyldiethoxysilan, 4-Isocyanatobutyldimethylmethoxysilan, 4-Isocyanatobutylphenyldimethoxy-silan, 4-Isocyanatobutylphenyldiethoxysilan, 4-Isocyanato(3-methylbutyl)trimethoxysilan, 4-Isocyanato(3-methylbutyl)triethoxysilan, 4-Isocyanato(3-methylbutyl)methyldimethoxysilan, 4-Isocyanato(3-methylbutyl)methyldiethoxysilan und 11-Isocyanatoundecyltrimethoxysilan oder beliebige Gemische solcher Isocyanatoalkoxysilane.

Weitere geeignete Ausgangsverbindungen A2) für das erfindungsgemäße Verfahren sind auch Isocyanatosilane mit Thiourethanstruktur, wie sie nach dem Verfahren der WO 2014/037279 durch Umsetzung beliebiger aliphatischer, cycloaliphatischer, araliphatischer oder aromatischer Diisocyanate der genannten Art mit beliebigen Mercaptosilanen in einem NCO : SH-Verhältnis von 6 : 1 bis 40 : 1 und anschließende Abtrennung überschüssiger, nicht umgesetzter monomerer Diisocyanate durch Dünnschichtdestillation erhalten werden können.

Ebenfalls geeignete Isocyanatoalkoxysilane A2) sind beispielsweise auch solche mit Formylharnstoffstruktur, wie sie nach dem Verfahren der WO 2015/113923 durch Umsetzung Formamidgruppen enthaltender Silane mit molar überschüssigen Mengen beliebiger aliphatischer, cycloaliphatischer, araliphatischer oder aromatischer Diisocyanate der genannten Art und anschließende destillative Abtrennung nicht umgesetzter monomerer Diisocyanate erhalten werden können.

Weitere geeignete Isocyanatoalkoxysilane A2) sind schließlich auch die beispielsweise nach dem Verfahren der EP-A 1 136 495 erhältlichen 1 : 1-Monoaddukte aus Diisocyanaten der genannten Art und speziellen sekundären Aminoalkylalkoxysilanen, insbesondere den aus der EP-A 0 596 360 bekannten, durch Umsetzung von Maleinsäuredialkylestern mit Aminosilanen erhältlichen Asparaginsäureestern, bei dem die Reaktionspartner unter Verwendung eines großen molaren Isocyanatüberschusses miteinander umgesetzt und im Anschluss die nicht umgesetzten monomeren Diisocyanate destillativ abgetrennt werden.

Bevorzugte Ausgangsverbindungen A2) für das erfindungsgemäße Verfahren sind insbesondere Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyldimethoxysilan, 3-Isocyanatopropyltriethoxysilan, 3-Isocyanatopropylmethyldiethoxysilan sowie beliebige Gemische solcher Isocyanatosilane. Besonders bevorzugt ist die Verwendung von 3-Isocyanatopropyltrimethoxysilan.

Geeignete Ausgangsverbindungen B1) für das erfindungsgemäße Verfahren sind beliebige Alkoxysilangruppen-freie Verbindungen, die mindestens ein Zerewitinoff-aktives H-Atom aufweisen.

Geeignete Alkoxysilangruppen-freie Verbindungen B1) sind beispielsweise Polyole, wie z. B. die aus der Polyurethanchemie bekannten polymeren Polyetherpolyole, Polyesterpolyole, Polycarbonatpolyole, Polyurethanpolyole und/oder Polyacrylatpolyole, die in der Regel eine mittlere Funktionalität von 1,8 bis 6, bevorzugt 1,8 bis 4, besonders bevorzugt von 1,9 bis 2,2 aufweisen. Das zahlenmittlere Molekulargewicht dieser Polyole (bestimmt nach DIN 55672-1:2016-03) beträgt in der Regel von 3000 bis 24000, vorzugsweise von 5000 bis 16000, besonders bevorzugt von 7000 bis 12000. Es können auch beliebige Gemische solcher Polyole als Ausgangsverbindungen B1) eingesetzt werden.

Der Wassergehalt geeigneter Polyole B1) für das erfindungsgemäße Verfahren beträgt in der Regel maximal 500 ppm, vorzugsweise maximal 300 ppm, besonders bevorzugt von 50 bis 250 ppm. Der Wassergehalt kann bei Bedarf aber auch durch geeignete Maßnahmen, beispielsweise durch Anlegen von Vakuum und gegebenenfalls Erwärmen auf eine Temperatur im Bereich von 80 bis 100°C auf Werte < 50 ppm reduziert werden.

Die als Alkoxysilangruppen-freie Ausgangsverbindungen B1) geeigneten Polyole weisen üblicherweise OH-Zahlen, bestimmt nach DIN 53240-2:2007-11, von mindestens 4,5 mg KOH/mg auf, vorzugsweise von 8 bis 30 mg KOH/g, besonders bevorzugt von 8 bis 20 mg KOH/g, am meisten bevorzugt von 9 bis 18 mg KOH/g.

Bevorzugte Polyolkomponenten B1) für das erfindungsgemäße Verfahren sind Polyetherpolyole, beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069 966, Seite 4, Zeile 20 bis Seite 5, Zeile 23 genannten Art, sofern sie den oben gemachten Angaben hinsichtlich Funktionalität und Molekulargewicht entsprechen. Als Polyolkomponenten B1) besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die durch Polymerisation von Tetrahydrofuran erhältlichen Polytetramethylenetherglykole des oben genannten Molekulargewichtsbereiches.

Ganz besonders bevorzugte Polyolkomponenten B1) sind Polyetherpolyole auf Basis von Polypropylenoxid, wie sie beispielsweise bei der Fa. Covestro Deutschland AG unter dem Handelsnamen Acclaim^{®}, z. B. als Acclaim^{®} 8200 N, kommerziell erhältlich sind.

Geeignete Ausgangsverbindungen B2) sind solche, die mindestens ein Zerewitinoff-aktives H-Atom und gleichzeitig mindestens eine Alkoxysilangruppe enthalten. Hierbei handelt es sich beispielsweise um beliebige Amino- und/oder Mercaptosilane.

Geeignete Aminosilane B2) sind beispielsweise Aminosilane, der allgemeinen Formel (II) 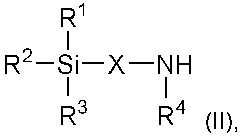 in welcher
R¹, R², R³ und X die für Formel (I) genannte Bedeutung haben
und
- R⁴: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 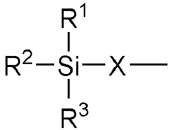 steht, in welchem R¹, R², R³ und X die vorstehend angegebene Bedeutung haben.

Geeignete Aminosilane der allgemeinen Formel (II) sind beispielsweise 3-Aminopropyltrimethoxysilan, 3-Aminopropyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyltris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethylbis(trimethylsiloxy)silan, 11-Aminoundecyltrimethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethyl-hexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopropylpolysiloxan, 3-Ureidopropyltriethoxysilan, 3-(m-Aminophenoxy)-propyltrimethoxysilan, m- und/oder p-Aminophenyltrimethoxysilan, 3-(3-Aminopropoxy)-3,3-dimethyl-1-propenyltrimethoxysilan, 3-Aminopropylmethylbis(trimethylsiloxy)-silan, 3-Aminopropyltris(trimethyl-siloxy)-silan, 3-Aminopropylpentamethyldisiloxan oder beliebige Gemische solcher Aminosilane.

Bevorzugte Aminosilane der allgemeinen Formel (II), sind solche, in welcher
- R¹, R² und R³: jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
- X: für einen linearen oder verzweigten Alkylenrest mit 3 oder 4 Kohlenstoffatomen steht, und
- R⁴: für einen gesättigten, linearen oder verzweigten, aliphatischen oder cycloaliphatischen Rest mit bis zu 6 Kohlenstoffatomen oder einen Rest der Formel 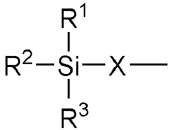 steht, in welchem R¹, R², R³ und X die vorstehend angegebene Bedeutung haben.

Besonders bevorzugte Aminosilane der allgemeinen Formel (II) sind solche, in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁴: für einen linearen Alkylrest mit bis zu 4 Kohlenstoffatomen oder einen Rest der Formel 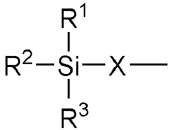 steht, in welchem R¹, R², R³ und X die vorstehend angegebene Bedeutung haben.

Ganz besonders bevorzugte Aminosilane der allgemeinen Formel (II) sind N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, Bis(3-trimethoxysilylpropyl)-amin und/oder Bis(3-triethoxysilylpropyl)amin.

Geeignete Aminosilane sind beispielsweise auch solche der allgemeinen Formel (III) 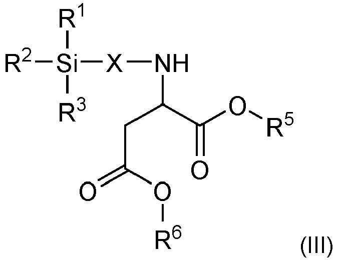 in welcher R¹, R² und R³ die für Formel (II) genannte Bedeutung haben,
- X: für einen linearen oder verzweigten organischen Rest mit mindestens 2 Kohlenstoffatomen steht und
- R⁵ und R⁶: unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Bei diesen Aminosilanen der allgemeinen Formel (III) handelt es sich um die silanfunktionellen Asparaginsäureester, die nach der Lehre der EP-A 0 596 360 durch Umsetzung von primäre Aminogruppen tragenden Aminosilanen mit Fumarsäureestern und/oder Maleinsäureestern erhältlich sind.

Geeignete Ausgangsverbindungen zu Herstellung von Aminosilanen der allgemeinen Formel (III) sind daher grundsätzlich beliebige Aminosilane der allgemeinen Formel (II) 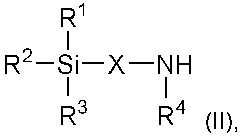 in welcher R¹, R², R³ und X die für Formel (II) genannte Bedeutung haben und R⁴ für Wasserstoff steht.

Diese werden mit Fumarsäurediestern und/oder Maleinsäurediestern der allgemeinen Formel (IV)

R⁵OOC-CH=CH-COOR⁶ (IV),

umgesetzt, in welcher die Reste R⁵ und R⁶ für gleiche oder verschiedene Reste stehen und organische Reste mit 1 bis 18, vorzugsweise 1 bis 9, besonders bevorzugt 1 bis 4, Kohlenstoffatomen bedeuten.

Bevorzugte Aminosilane der allgemeinen Formel (III) sind Umsetzungsprodukte von Aminosilanen der allgemeinen Formel (II), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁴: für Wasserstoff steht,
mit
Fumarsäurediestern und/oder Maleinsäurediestern der allgemeinen Formel (IV), in welcher die Reste R⁵ und R⁶ für gleiche oder verschiedene Reste stehen und einen Methyl-, Ethyl-, n-Butyl- oder 2-Ethylhexylrest bedeuten.

Besonders bevorzugte Aminosilane der allgemeinen Formel (III) sind Umsetzungsprodukte von 3-Aminopropyltrimethoxysilan und/oder 3-Aminopropyltriethoxysilan mit Maleinsäurediethylester.

Weitere geeignete Aminosilane für das erfindungsgemäße Verfahren sind beispielsweise auch solche der allgemeinen Formel (V) 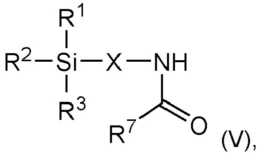 in welcher R¹, R² und R³ die für Formel (II) genannte Bedeutung haben,
- X: für einen linearen oder verzweigten organischen Rest mit mindestens 2 Kohlenstoffatomen und
- R⁷: für einen gesättigten linearen oder verzweigten, aliphatischen oder cycloaliphatischen organischen Rest mit 1 bis 8 Kohlenstoffatomen steht.

Bei diesen Aminosilanen der allgemeinen Formel (V) handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkoholabspaltung erhalten lassen.

Geeignete Ausgangsverbindungen zu Herstellung von Aminosilanen der allgemeinen Formel (V) sind daher grundsätzlich beliebige Aminosilane der allgemeinen Formel (II) 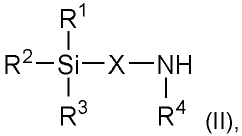 in welcher R¹, R², R³ und X die für Formel (II) genannte Bedeutung haben und R⁴ für Wasserstoff steht.

Diese werden mit Alkylcarbonsäurealkylestern der allgemeinen Formel (VI)

R⁸-COOR⁹ (VI),

umgesetzt, in welcher
- R⁸: für Wasserstoff oder einen gesättigten linearen oder verzweigten, aliphatischen oder cycloaliphatischen organischen Rest mit 1 bis 8 Kohlenstoffatomen und
- R⁹⁰: für einen gesättigten aliphatischen organischen Rest mit 1 bis 4 Kohlenstoffatomen steht.

Bevorzugte Aminosilane der allgemeinen Formel (V) sind Umsetzungsprodukte von Aminosilanen der allgemeinen Formel (II), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁴: für Wasserstoff steht,
mit
Ameisensäurealkylestern der allgemeinen Formel (VI), in welcher
- R⁸: für Wasserstoff und
- R⁹: für einen gesättigten aliphatischen organischen Rest mit 1 bis 4 Kohlenstoffatomen steht.

Besonders bevorzugte Aminosilane der allgemeinen Formel (V) sind Umsetzungsprodukte von 3-Aminopropyltrimethoxysilan und/oder 3-Aminopropyltriethoxysilan mit Methylformiat und/oder Ethylformiat.

Neben den genannten Aminosilanen B2) stellen auch Mercaptosilane geeignete Ausgangsverbindungen B2) für das erfindungsgemäße Verfahren dar.

Hierbei handelt es sich um Mercaptosilane der allgemeinen Formel (VII) 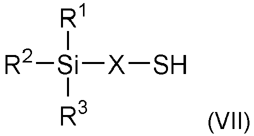 in welcher
R¹, R², R³ und X die für Formel (I) genannte Bedeutung haben.

Geeignete Mercaptosilane B2) sind beispielsweise 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

In einer besonderen Ausführungsform werden die Komponenten A1) und/oder B1) in der Menge eingesetzt, dass die Summe der Komponenten A1) und/oder B1) 40 bis 99 Gew.-%, bevorzugt 60 bis 98,5 Gew.-%, besonders bevorzugt 70 bis 98 Gew.-% und ganz besonders bevorzugt 85 bis 97 Gew.-% beträgt, jeweils bezogen die Summe der Massen von A1), B1), A2), B2) und C).

In einer weiteren besonderen Ausführungsform werden die Komponenten A2) und/oder B2) in der Menge eingesetzt, dass die Summe der Komponenten A2) und/oder B2) 0,5 bis 20 Gew.-%, bevorzugt 1,0 bis 10 Gew.-%, besonders bevorzugt 1,5 bis 8 Gew.-% und ganz besonders bevorzugt 2,0 bis 6,0 Gew.-% beträgt, jeweils bezogen die Summe der Massen von A1), B1), A2), B2) und C).

Als Zusatzstoffe C) werden erfindungsgemäß Verbindungen eingesetzt, die zur Erhaltung des gewünschten Produkts aus der Reaktion der Komponenten A1) und/oder B1) mit A2) und/oder B2) notwendig sind. Hierzu zählen beispielsweise Katalysatoren oder Isocyanat-reaktive Verbindungen, wie beispielsweise monofunktionelle Alkohole, zur Einstellung der finalen NCO-Gehalte. Erfindungsgemäß wird als Zusatzstoff mindestens Zinn(II)-chlorid als Katalysator eingesetzt, bevorzugt wird nur Zinn(II)-chlorid als Katalysator eingesetzt. Die Summe der eingesetzten Zusatzstoffe C) beträgt bevorzugt mindestens 0,0005 Gew.-%, besonders bevorzugt 0,001 bis 10 Gew.-%, ganz besonders bevorzugt 0,002 bis 5 Gew.-% und am meisten bevorzugt 0,002 bis 1 Gew.-%, jeweils bezogen auf die Summe der Massen von A1), B1), A2), B2) und C).

In einer besonderen Ausführungsform werden als Zusatzstoffe C) nur Katalysatoren und monofunktionelle Alkohole eingesetzt.

Zur Durchführung des erfindungsgemäßen Verfahrens wird mindestens eine Alkoxysilangruppen-freie, mindestens eine Isocyanatgruppe enthaltende Verbindung A1) und/oder mindestens eine Alkoxysilangruppen-freie, mindestens ein Zerewitinoff-aktives H-Atom enthaltende Verbindung B1) mit mindestens einer, mindestens eine Alkoxysilangruppe und mindestens eine Isocyanatgruppe enthaltenden Verbindung A2) und/oder mindestens einer, mindestens eine Alkoxysilangruppe und mindestens ein Zerewitinoff-aktives H-Atom enthaltenden Verbindung B2) in beliebiger Reihenfolge vorzugsweise bei Temperaturen von 20 bis 120 °C, besonders bevorzugt von 30 bis 80 °C, ganz besonders bevorzugt von 40 bis 60 °C, unter Einhaltung eines Äquivalentverhältnis von Isocyanatgruppen zu Zerewitinoff-aktiven H-Atomen von 0,8 : 1 bis 1,5 : 1, vorzugsweise von 1 : 1 bis 1,5 : 1, besonders bevorzugt 1 : 1 bis 1,2 : 1, in Gegenwart von Zinn(II)-chlorid als Katalysator umgesetzt.

Dabei kann das Zinn(II)-chlorid sowohl wasserfrei, vorzugsweise aber auch in Form seines Dihydrats eingesetzt werden. Die Zugabe des Katalysators zum Reaktionsgemisch kann lösemittelfrei in Substanz oder in einem geeigneten Lösemittel gelöst erfolgen.

Geeignete Katalysatorlösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Ethylenglykol, Diethylenglykol, Propylenglykol, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Als Katalysatorlösemittel ebenfalls geeignet sind auch die vorstehend als Alkoxysilangruppen-freie Ausgangsverbindungen B1) beschriebenen Polyole, ganz besonders bevorzugt Polyetherpolyole auf Basis von Polypropylenoxid. Sollte eine Verbindung B1) als Lösungsmittel für einen Katalysator eingesetzt werden, d.h. der Katalysator wird vor der Zugabe zu den Komponenten, A1), B1), A2) und/oder B2) in dem Lösungsmittel gelöst, so wird die Masse der als Lösungsmittel eingesetzten Verbindung B1) zu der Masse der Zusatzstoffe C) gerechnet.

Unabhängig von der Art der Zugabe, lösemittelfrei oder als Lösung, kommt Zinn(II)-chlorid beim erfindungsgemäßen Verfahren vorzugsweise in einer Menge von 0,0005 bis 0,1 Gew.-%, besonders bevorzugt von 0,001 bis 0,02 Gew.-%, ganz besonders bevorzugt von 0,002 bis 0,01 Gew.-%, jeweils berechnet als Wirksubstanz Zinn(II)-chlorid bezogen auf das Gesamtgewicht der Reaktionspartner A1), A2), B1) und B2) zum Einsatz.

In einer möglichen Ausführungsform wird beim erfindungsgemäßen Verfahren mindestens eine Alkoxysilangruppen-freie Ausgangsverbindungen B1), vorzugsweise ein Polyetherpolyol oder ein Gemisch von Polyetherpoylolen, gegebenenfalls unter Inertgas, wie beispielsweise Stickstoff, bei einer Temperatur von 20 bis 120°C vorgelegt. Anschließend wird eine Alkoxysilangruppen-enthaltende Verbindung A2), vorzugsweise ein Isocyanatosilan oder ein Gemisch von Isocyanatosilanen in der oben angegebenen Menge zugegeben und die Reaktionstemperatur für die Urethanisierung gegebenenfalls durch eine geeignete Maßnahme (Heizen oder Kühlen) auf eine Temperatur von vorzugsweise 30 bis 80 °C, ganz besonders bevorzugt von 40 bis 60 °C eingestellt.

In einer anderen möglichen Ausführungsform des erfindungsgemäßen Verfahrens wird mindestens eine Alkoxysilangruppen-freie Ausgangsverbindungen B1), vorzugsweise ein Polyetherpolyol oder ein Gemisch von Polyetherpoylolen, unter den genannten Bedingungen vorgelegt. Anschließend wird eine Alkoxysilangruppen-freie Isocyanatkomponente A1), vorzugsweise ein Diisocyanat oder ein Gemisch von Diisocyanaten, und eine Alkoxysilanfunktionelle Isocyanatkomponente A2), vorzugsweise ein Isocyanatosilan oder ein Gemisch von Isocyanatosilanen, in beliebiger Reihenfolge oder als Mischung in der oben angegebenen Menge zugegeben und die Reaktionstemperatur für die Urethanisierung gegebenenfalls durch eine geeignete Maßnahme (Heizen oder Kühlen) auf eine Temperatur von vorzugsweise 30 bis 80 °C, ganz besonders bevorzugt von 40 bis 60 °C eingestellt.

In einer weiteren möglichen Ausführungsform des erfindungsgemäßen Verfahrens wird mindestens eine Alkoxysilangruppen-freie Ausgangsverbindungen B1), vorzugsweise ein Polyetherpolyol oder ein Gemisch von Polyetherpoylolen, unter den genannten Bedingungen vorgelegt. Anschließend wird zunächst eine Alkoxysilangruppen-freie Isocyanatkomponente A1), vorzugsweise ein Diisocyanat oder ein Gemisch von Diisocyanaten in molar überschüssiger Menge zugegeben und die Reaktionstemperatur für die Urethanisierung gegebenenfalls durch eine geeignete Maßnahme (Heizen oder Kühlen) auf eine Temperatur von vorzugsweise 30 bis 80 °C, ganz besonders bevorzugt von 40 bis 60 °C eingestellt. Nach Erreichen des angestrebten Isocyanatgehaltes, vorzugsweise wenn sämtliche Zerewitinoff-aktiven H-Atome der Komponente B1) abreagiert haben, wird eine Alkoxysilangruppen-enthaltende Verbindung B2), vorzugsweise ein Aminosilan oder ein Gemisch von Aminosilanen in einer solchen Menge zugegeben, dass das Äquivalentverhältnis von Isocyanatgruppen zu Zerewitinoff-aktiven H-Atomen aller Reaktionspartner A1), B1) und B2) den oben gemachten Angaben entspricht, vorzugsweise in einer solchen Menge, dass auf jede Isocyanatgruppe des im ersten Verfahrensschritt (Urethanisierung) erhaltenen Polyurethans von 0,8 bis 1,2, vorzugsweise von 0,9 bis 1,1, besonders bevorzugt von 0,95 bis 1,05 Aminogruppen entfallen.

In einer weiteren möglichen Ausführungsform des erfindungsgemäßen Verfahrens wird mindestens eine Alkoxysilangruppen-freie Ausgangsverbindungen B1), vorzugsweise ein Polyetherpolyol B1) oder ein Gemisch von Polyetherpoylolen, unter den genannten Bedingungen vorgelegt. Anschließend wird zunächst eine Alkoxysilangruppen-freie Isocyanatkomponente A1), vorzugsweise ein Diisocyanat oder ein Gemisch von Diisocyanaten, und eine Alkoxysilan-funktionelle Isocyanatkomponente A2), vorzugsweise ein Isocyanatosilan oder ein Gemisch von Isocyanatosilanen, in beliebiger Reihenfolge oder als Mischung in molar überschüssiger Menge zugegeben und die Reaktionstemperatur für die Urethanisierung gegebenenfalls durch eine geeignete Maßnahme (Heizen oder Kühlen) auf eine Temperatur von vorzugsweise 30 bis 80 °C, ganz besonders bevorzugt von 40 bis 60 °C eingestellt. Nach Erreichen des angestrebten Isocyanatgehaltes, vorzugsweise wenn sämtliche Zerewitinoff-aktiven H-Atome der Komponente B1) abreagiert haben, wird eine Alkoxysilangruppen-enthaltende Verbindung B2), vorzugsweise ein Aminosilan oder ein Gemisch von Aminosilanen, in einer solchen Menge zugegeben, dass das Äquivalentverhältnis von Isocyanatgruppen zu Zerewitinoff-aktiven H-Atomen aller Reaktionspartner A1), A2), B1) und B2) den oben gemachten Angaben entspricht, vorzugsweise in einer solchen Menge, dass auf jede Isocyanatgruppe des im ersten Verfahrensschritt (Urethanisierung) erhaltenen Polyurethans von 0,8 bis 1,2, vorzugsweise von 0,9 bis 1,1, besonders bevorzugt von 0,95 bis 1,05 Aminogruppen entfallen.

Unabhängig von der Art der Reaktionsführung kann die Zugabe des Katalysators Zinn(II)chlorid zum Reaktionsgemisch zu einem beliebigen Zeitpunkt während der Urethanisierungsreaktion erfolgen. Es ist aber auch möglich, den Katalysator entweder der Alkoxysilangruppen-freien Ausgangsverbindungen B1), der Alkoxysilangruppen-freien Isocyanatkomponente A1) und/oder dem Alkoxysilan-funktionellen Isocyanat A2) bereits vor Beginn der eigentlichen Umsetzung zuzumischen.

Der Verlauf der Umsetzung kann beim erfindungsgemäßen Verfahren durch z. B. titrimetrische Bestimmung des NCO-Gehaltes nach DIN EN ISO 11909:2007-05 oder durch Infrarotspektroskopie (IR) verfolgt werden.

Die Umsetzung wird bei sämtlichen Ausführungsformen des erfindungsgemäßen Verfahrens vorzugsweise so geführt, dass die erfindungsgemäßen Verfahrensprodukte frei von Zerewitinoff-aktiven H-Atomen sind. Geringe Restmengen an Isocyanatgruppen können gegebenenfalls durch Zugabe von gegenüber Isocyanatgruppen reaktiven Verbindungen, beispielsweise niedermolekularen Monoalkoholen, wie z. B. Methanol oder Ethanol, vorzugsweise in äquimolaren Mengen abgefangen werden.

Die hohe katalytische Aktivität des anorganischen Zinnkatalysators Zinn(II)chlorid ermöglicht es beim erfindungsgemäßen Verfahren, bereits unter Einsatz sehr geringer Katalysatorkonzentrationen in kürzeren Reaktionszeiten und bei niedrigeren Temperaturen als mit den bekannten den Organozinn-Katalysatoren des Standes der Technik, wie insbesondere DBTL, praktisch farblose silanterminierte Polyurethane herzustellen, die in der Regel Farbzahlen von unter 120 APHA, vorzugsweise von unter 80 APHA, besonders bevorzugt von unter 60 APHA aufweisen.

Die erfindungsgemäßen Verfahrensprodukte, stehen solchen, die unter DBTL-Katalyse erhalten wurden, bezüglich Lagerstabilität, Viskosität und Verarbeitbarkeit in nichts nach. Sie eignen sich hervorragend als Bindemittel für Lack-, Dichtstoff- oder Klebstoffrohstoffe.

In einer besonderen Ausführungsform des erfindungsgemäßen Verfahrens werden Alkoxysilangruppen enthaltende Polyurethane und/oder Polyurethanharnstoffe durch Umsetzung von
A1) mindestens einer Alkoxysilangruppen-freien, mindestens eine Isocyanatgruppe enthaltenden Verbindung und/oder
B1) mindestens einer Alkoxysilangruppen-freien, mindestens ein Zerewitinoff-aktives H-Atom enthaltenden Verbindung
   mit
A2) mindestens einer, mindestens eine Alkoxysilangruppe und mindestens eine NCO-Gruppe enthaltenden Verbindung und/oder
B2) mindestens einer, mindestens eine Alkoxysilangruppe und mindestens ein Zerewitinoff-aktives H-Atom enthaltenden Verbindung
   in Anwesenheit von
C) Zusatzstoffen,

dadurch gekennzeichnet, dass C) Zinn(II)-chlorid als Katalysator enthält, wobei
die Summe der Massen von A1) und/oder B1) 40 bis 99 Gew.-%, bevorzugt 60 bis 98,5 Gew.-%, besonders bevorzugt 70 bis 98 Gew.-% und ganz besonders bevorzugt 85 bis 97 Gew.-% beträgt,
die Summe der Massen von A2) und/oder B2) 0,5 bis 20 Gew.-%, bevorzugt 1,0 bis 10 Gew.-%, besonders bevorzugt 1,5 bis 8 Gew.-% und ganz besonders bevorzugt 2,0 bis 6,0 Gew.-% beträgt, und
die Summe der Massen von C) mindestens 0,0005 Gew.-%, bevorzugt 0,001 bis 10 Gew.-%, besonders bevorzugt 0,002 bis 5 Gew.-% und ganz besonders bevorzugt 0,002 bis 1 Gew.-% beträgt,
wobei die Angabe der Gew.-% auf die Summe der Massen von A1), B1), A2), B2) und C) bezogen ist und sich auf 100 Gew.-% summieren.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05. Der Verlauf der Umsetzungen und die NCO-Freiheit der silanterminierten Polyurethane wurde anhand der Abnahme bzw. des Fehlens der Isocyanatbande (ca. 2270 cm⁻¹) im IR-Spektrum verfolgt.

OH-Zahlen wurden titrimetrisch nach DIN 53240-2:2007-11 bestimmt.

Die Aminzahlen wurden in Anlehnung DIN EN ISO 9702:1998-10 durch potentiometrische Titration mit Perchlorsäure in Eisessig bestimmt.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

### Ausgangsverbindungen

| | | |
|---|---|---|
| A1-1: | Isophorondiisocyanat | |
| B1-1: | lineares Polypropylenetherpolyol der Covestro Deutschland AG, Leverkusen (Acclaim Polyol 22200 N) | |
| | OH-Zahl titriert: | 4,8 mg KOH/g |
| | Äquivalentgewicht: | 11688 g/val OH |
| B1-2: | lineares Polypropylenetherpolyol der Covestro Deutschland AG, Leverkusen (Acclaim Polyol 8200 N) | |
| | OH-Zahl titriert: | 13,8 mg KOH/g |
| | Äquivalentgewicht: | 4065 g/val OH |
| B1-3: | lineares Polypropylenetherpolyol der Covestro Deutschland AG, Leverkusen (Acclaim Polyol 18200 N) | |
| | OH-Zahl titriert: | 6,0 mg KOH/g |
| | Äquivalentgewicht: | 9350 g/val OH |
| A2-1: | 3-Isocyanatopropyltrimethoxysilan (Geniosil GF 40, Wacker Chemie AG) | |
| | NCO-Gehalt titriert: | 19,5 % |
| | Äquivalentgewicht: | 215 g/val NCO |
| B2-1: | Diethyl(3-(trimethoxysilyl)propyl)aspartat, hergestellt gemäß EP-A 0 596 360, Bsp. 5 | |
| | Aminzahl titriert: | 155,2 mg KOH/g |
| | Äquivalentgewicht: | 361,5 g/val NH |

### Beispiel 1 (erfindungsgemäß)

In einem Rührgefäß mit Innenthermometer und Rückflußkühler wurden 1466,4 g (0,125 val) B1-1 bei 50°C unter trockenem Stickstoff vorgelegt und mit 0,06 g (40 ppm) einer 28 %igen Lösung von Zinn(II)chlorid-Dihydrat (SnCl₂ · 2H₂O) in Monoethylenglykol, entsprechend einem Sn-Gehalt von 5,8 ppm, bezogen auf den Gesamtansatz, versetzt. Anschließend wurden 30,7 g (0,143 val) A2-1 zugegeben und das Reaktionsgemisch bei 50°C weiter gerührt, bis der NCO-Gehalt nach 90 Minuten 0,05 % betrug. Dann wurden 0,6 g (0,019 val) Methanol zugegeben und die Mischung bei 50°C weiter gerührt, bis nach ca. 60 Minuten im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 62000 mPas |
| Farbzahl: | 16 APHA |
| NCO-Gehalt: | ≤ 0,03 % |

### Beispiel 2 (Vergleich)

In einem Rührgefäß mit Innenthermometer und Rückflußkühler wurden 1466,4 g (0,125 val) B1-1 bei 60°C unter trockenem Stickstoff vorgelegt und mit 0,075 g (50 ppm) Dibutylzinndilaurat (DBTL), entsprechend einem Sn-Gehalt von 9,4 ppm, bezogen auf den Gesamtansatz, versetzt. Anschließend wurden 30,7 g (0,143 val) A2-1 zugegeben und das Reaktionsgemisch bei 60°C weiter gerührt, bis der NCO-Gehalt nach 3 Stunden 0,05 % betrug. Dann wurden 0,6 g (0,019 val) Methanol zugegeben und die Mischung bei 60°C weiter gerührt, bis nach weiteren 3 Stunden im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 62200 mPas |
| Farbzahl: | 14 APHA |
| NCO-Gehalt: | ≤ 0,03 % |

### Beispiel 3 (erfindungsgemäß)

In einem Rührgefäß mit Innenthermometer und Rückflußkühler wurden 1418,6 g (0,349 val) B1-2 bei 50°C unter trockenem Stickstoff vorgelegt und mit 0,06 g (40 ppm) einer 28 %igen Lösung von Zinn(II)chlorid-Dihydrat (SnCl₂ · 2H₂O) in Monoethylenglykol, entsprechend einem Sn-Gehalt von 5,8 ppm, bezogen auf den Gesamtansatz, versetzt. Anschließend wurden 78,6 g (0,366 val) A2-1 zugegeben und das Reaktionsgemisch bei 50°C weiter gerührt, bis der NCO-Gehalt nach 3 Stunden 0,05 % betrug. Dann wurden 0,5 g (0,016 val) Methanol zugegeben und die Mischung bei 50°C weitergerührt, bis nach ca. 90 Minuten im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 6100 mPas |
| Farbzahl: | 16 APHA |
| NCO-Gehalt: | ≤ 0,03 % |

### Beispiel 4 (Vergleich)

In einem Rührgefäß mit Innenthermometer und Rückflußkühler wurden 1418,6 g (0,349 val) B1-2 bei 60°C unter trockenem Stickstoff vorgelegt und mit 0,13 g (90 ppm) Dibutylzinndilaurat (DBTL), entsprechend einem Sn-Gehalt von 16,8 ppm, bezogen auf den Gesamtansatz, versetzt. Anschließend wurden 78,6 g (0,366 val) A2-1 zugegeben und das Reaktionsgemisch bei 60°C weiter gerührt, bis der NCO-Gehalt nach 4 Stunden 0,05 % betrug. Dann wurden 0,6 g (0,019 val) Methanol zugegeben und die Mischung bei 60°C weiter gerührt, bis nach weiteren 2 Stunden im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 5700 mPas |
| Farbzahl: | 18 APHA |
| NCO-Gehalt: | ≤ 0,03 % |

### Beispiel 5 (erfindungsgemäß)

In einem Rührgefäß mit Innenthermometer und Rückflußkühler wurden 1459,9 g (0,156 val) B1-3 bei 50°C unter trockenem Stickstoff vorgelegt und mit 0,06 g (40 ppm) einer 28 %igen Lösung von Zinn(II)chlorid-Dihydrat (SnCl₂ · 2H₂O) in Monoethylenglykol, entsprechend einem Sn-Gehalt von 5,8 ppm, bezogen auf den Gesamtansatz, versetzt. Anschließend wurden 37,3 g (0,173 val) A2-1 zugegeben und das Reaktionsgemisch bei 50°C weiter gerührt, bis der NCO-Gehalt nach 90 Minuten 0,05 % betrug. Dann wurden 0,5 g (0,016 val) Methanol zugegeben und die Mischung bei 50°C weitergerührt, bis nach ca. 60 Minuten im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 42500 mPas |
| Farbzahl: | 14 APHA |
| NCO-Gehalt: | ≤ 0,03 % |

### Beispiel 6 (Vergleich)

In einem Rührgefäß mit Innenthermometer und Rückflußkühler wurden 1459,9 g (0,156 val) B1-3 bei 50°C unter trockenem Stickstoff vorgelegt und mit 0,075 g (50 ppm) Dibutylzinndilaurat (DBTL), entsprechend einem Sn-Gehalt von 9,4 ppm, bezogen auf den Gesamtansatz, versetzt. Anschließend wurden 37,3 g (0,173 val) A2-1 zugegeben und das Reaktionsgemisch bei 50°C weiter gerührt, bis der NCO-Gehalt nach 5 Stunden 0,05 % betrug. Dann wurden 0,5 g (0,016 val) Methanol zugegeben und die Mischung bei 50°C gerührt, bis nach weiteren 2 Stunden im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 62200 mPas |
| Farbzahl: | 14 APHA |
| NCO-Gehalt: | ≤ 0,03 % |

### Beispiel 7 (erfindungsgemäß)

In einem Rührgefäß mit Innenthermometer und Rückflußkühler wurden 2032,6 g (0,500 val) B1-2 bei 60°C unter trockenem Stickstoff vorgelegt und mit 0,05 g (22 ppm) Zinn(II)chlorid-Dihydrat (SnCl₂ · 2H₂O), entsprechend einem Sn-Gehalt von 11,5 ppm, bezogen auf den Gesamtansatz, versetzt. Anschließend wurden 83,3 g (0,750 val) A1-1 und 26,9 g (0,125 val) A2-1 zugegeben und das Reaktionsgemisch bei 60°C weiter gerührt, bis nach ca. 2 Stunden der einer vollständigen Urethanisierung entsprechende NCO-Gehalt von 0,74 % erreicht ist. Dann wurden 135,6 g (0,375 val) B2-1 zügig zugetropft und die Mischung bei 50°C weiter gerührt, bis nach 1 Stunde im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 29200 mPas |
| Farbzahl: | 16 APHA |
| NCO-Gehalt: | ≤ 0,03 % |

### Beispiel 8 (Vergleich)

In einem Rührgefäß mit Innenthermometer und Rückflußkühler wurden 2032,6 g (0,500 val) B1-2 bei 60°C unter trockenem Stickstoff vorgelegt und mit 0,15 g (65 ppm) Dibutylzinndilaurat (DBTL), entsprechend einem Sn-Gehalt von 11,7 ppm, bezogen auf den Gesamtansatz, versetzt. Anschließend wurden 83,3 g (0,750 val) A1-1 und 26,9 g (0,125 val) A2-1 zugegeben und das Reaktionsgemisch bei 60°C weiter gerührt, bis nach ca. 4 Stunden der einer vollständigen Urethanisierung entsprechende NCO-Gehalt von 0,73 % erreicht ist. Dann wurden 135,6 g (0,375 val) B2-1 zügig zugetropft und die Mischung bei 50°C weiter gerührt, bis nach 90 Minuten im IR-Spektrum keine Isocyanatbande mehr zu sehen war.

Nach Abkühlen auf Raumtemperatur lag ein Alkoxysilangruppen enthaltendes Polyurethanprepolymer mit folgenden Kenndaten vor:

| | |
|---|---|
| Viskosität (23°C): | 29470 mPas |
| Farbzahl: | 16 APHA |
| NCO-Gehalt: | ≤ 0,03 % |

**Tabelle 1: Übersicht**

| Beispiel | 1 | 2* | 3 | 4* | 5 | 6* | 7 | 8* |
|---|---|---|---|---|---|---|---|---|
| Katalysator | SnCl₂ | DBTL | SnCl₂ | DBTL | SnCl₂ | DBTL | SnCl₂ | DBTL |
| Katalysatormenge [ppm] | 40 | 50 | 40 | 90 | 40 | 50 | 22 | 65 |
| Reaktionstemperatur [°C] | 50 | 60 | 50 | 60 | 50 | 50 | 60 | 60 |
| Zeit bis vollständiger Urethanisierung [h] | 1,5 | 3 | 3 | 4 | 1,5 | 5 | 2 | 4 |
| Viskosität bei 23°C [mPas] | 62000 | 62200 | 6100 | 5700 | 42500 | 62200 | 29200 | 29470 |
| Farbzahl [APHA] | 16 | 14 | 16 | 18 | 14 | 14 | 16 | 16 |

| | | | | | | | | |
|---|---|---|---|---|---|---|---|---|
| * Vergleichsbeispiel | | | | | | | | |

Wie in Tabelle 1 dargestellt, führt der Einsatz von geringeren Mengen des erfindungsgemäßen Katalysators SnCl₂ im Vergleich mit DBTL zu einer schnelleren vollständigen Urethanisierung, selbst wenn die Reaktionstemperatur beim Verfahren mit DBTL erhöht ist (Beispiele 1 bis 4).

### Beispiel 9

Die Alkoxysilangruppen enthaltenden Polyurethanprepolymere aus Beispiel 5 und Vergleichsbeispiel 6 wurden in verschlossenen Aluminiumgebinden 4 Wochen bei 50°C gelagert. Die Viskosität des Produktes aus Beispiel 5 stieg dabei um 4,9 % auf 44600 mPas an, die Farbzahl erhöhte sich auf 15. Die Viskosität des Produktes aus Vergleichsbeispiel 6 stieg um 5,8 % auf 65800 mPas an, die Farbzahl blieb unverändert bei 14.

Das Beispiel zeigt, dass nach dem erfindungsgemäßen Verfahren unter Verwendung von Zinn(II)-chlorid als Katalysator erhaltenen Produkte solchen, die unter DBTL-Katalyse hergestellt wurden bezüglich Lagerstabilität in nichts nachstehen.

## Patentansprüche

1. Verfahren zur Herstellung Alkoxysilangruppen enthaltender Polyurethane und/oder Polyurethanharnstoffe durch Umsetzung
A1) mindestens einer Alkoxysilangruppen-freien, mindestens eine Isocyanatgruppe enthaltenden Verbindung und/oder
B1) mindestens einer Alkoxysilangruppen-freien, mindestens ein Zerewitinoff-aktives H-Atom enthaltenden Verbindung
mit
A2) mindestens einer, mindestens eine Alkoxysilangruppe und mindestens eine NCO-Gruppe enthaltenden Verbindung und/oder
B2) mindestens einer, mindestens eine Alkoxysilangruppe und mindestens ein Zerewitinoff-aktives H-Atom enthaltenden Verbindung
in Anwesenheit von
C) Zusatzstoffe,
**dadurch gekennzeichnet, dass** C) Zinn(II)-chlorid als Katalysator enthält.

2. Verfahren gemäß Anspruch 1, **dadurch gekennzeichnet, dass** es sich bei der Ausgangskomponente A1) um Diisocyanate mit aliphatisch, cycloaliphatisch, araliphatisch und/oder aromatisch gebundenen Isocyanatgruppen. handelt

3. Verfahren gemäß einem der Ansprüche 1 und 2, **dadurch gekennzeichnet, dass** es sich bei der Ausgangskomponente A1) um 1,5-Diisocyanatopentan, 1,6-Diisocyanatohexan, 1-lsocyanato-3,3,5-trimethyl-5-isocyanato-methylcyclohexan, 2,4`- und/oder 4,4`-Diisocyanatodicyclohexylmethan handelt.

4. Verfahren gemäß einem der Ansprüche 1 bis 3, **dadurch gekennzeichnet, dass** es sich bei der Ausgangskomponente A2) um Verbindungen handelt, in denen mindestens eine, vorzugsweise genau eine, Isocyanatgruppe und mindestens eine, vorzugsweise genau eine, Silangruppe mit mindestens einem Alkoxysubstituenten vorliegen.

5. Verfahren gemäß einem der Ansprüche 1 bis 4, **dadurch gekennzeichnet, dass** es sich bei der Ausgangskomponente A2) um Alkoxysilan-funktionelle Isocyanate der allgemeinen Formel (I) 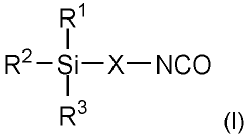 handelt,
in welcher
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
X für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht.

6. Verfahren gemäß einem der Ansprüche 1 bis 5, **dadurch gekennzeichnet, dass** es sich bei der Ausgangskomponente A2) um Isocyanatomethyltrimethoxysilan, Isocyanatomethyltriethoxysilan, Isocyanatomethylmethyldimethoxysilan, Isocyanatomethylmethyldiethoxysilan, 3-Isocyanatopropyltrimethoxysilan, 3-Isocyanatopropylmethyldimethoxysilan, 3-Isocyanatopropyltriethoxysilan, 3-Isocyanatopropylmethyldiethoxysilan sowie beliebige Gemische solcher Isocyanatosilane handelt.

7. Verfahren gemäß einem der Ansprüche 1 bis 6, **dadurch gekennzeichnet, dass** es sich bei der Ausgangskomponente B1) um ein Polyetherpolyol eines zahlenmittleren Molekulargewichts (bestimmt nach DIN 55672-1:2016-03) von 3000 bis 24000 g/mol handelt.

8. Verfahren gemäß einem der Ansprüche 1 bis 7, **dadurch gekennzeichnet, dass** es sich bei der Ausgangskomponente B1) um ein Polyetherpolyol auf Basis von Polypropylenoxid handelt.

9. Verfahren gemäß einem der Ansprüche 1 bis 8, **dadurch gekennzeichnet, dass** es sich bei der Ausgangskomponente B2) um ein Aminosilan, der allgemeinen Formel (II) 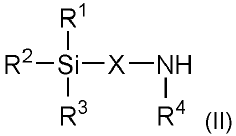 handelt, in welcher
R¹, R², R³ und X die Anspruch 5 genannte Bedeutung haben
und
R⁴ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 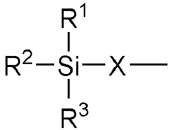 steht, in welchem R¹, R², R³ und X die vorstehend angegebene Bedeutung haben.

10. Verfahren gemäß einem der Ansprüche 1 bis 9, **dadurch gekennzeichnet, dass**
die Summe der Massen von A1) und/oder B1) 40 bis 99 Gew.-%, bevorzugt 60 bis 98,5 Gew.-%, besonders bevorzugt 70 bis 98 Gew.-% und ganz besonders bevorzugt 85 bis 97 Gew.-% beträgt,
die Summe der Massen von A2) und/oder B2) 0,5 bis 20 Gew.-%, bevorzugt 1,0 bis 10 Gew.-%, besonders bevorzugt 1,5 bis 8 Gew.-% und ganz besonders bevorzugt 2,0 bis 6,0 Gew.-% beträgt, und
die Summe der Massen von C) mindestens 0,0005 Gew.-%, bevorzugt 0,001 bis 10 Gew.-%, besonders bevorzugt 0,002 bis 5 Gew.-% und ganz besonders bevorzugt 0,002 bis 1 Gew.-% beträgt,
wobei die Angabe der Gew.-% auf die Summe der Massen von A1), B1), A2), B2) und C) bezogen ist und sich auf 100 Gew.-% summieren.

11. Verfahren gemäß einem der Ansprüche 1 bis 10, **dadurch gekennzeichnet, dass** es sich bei der Ausgangskomponente B2) um ein Umsetzungsprodukt von 3-Aminopropyltrimethoxysilan und/oder 3-Aminopropyltriethoxysilan mit Maleinsäurediethylester handelt.

12. Verfahren gemäß einem der Ansprüche 1 bis 11, **dadurch gekennzeichnet, dass** die mindestens eine NCO-Gruppen enthaltenden Komponente A1 und/oder A2) und die mindestens ein Zerewitinoff-aktives H-Atom enthaltenden Verbindung B1) und/oder B2) in beliebiger Reihenfolge vorzugsweise bei Temperaturen von 20 bis 120 °C, besonders bevorzugt von 30 bis 80 °C, ganz besonders bevorzugt von 40 bis 60 °C, unter Einhaltung eines Äquivalentverhältnis von Isocyanatgruppen zu Zerewitinoff-aktiven H-Atomen von 0,8 : 1 bis 1,5 : 1, vorzugsweise von 1 : 1 bis 1,5 : 1, besonders bevorzugt 1 : 1 bis 1,2 : 1, in Gegenwart von Zinn(II)-chlorid als Katalysator miteinander umgesetzt werden.

13. Verfahren gemäß einem der Ansprüche 1 bis 12, **dadurch gekennzeichnet, dass** der Katalysator Zinn(II)-chlorid wasserfrei oder vorzugsweise in Form seines Dihydrats in einer Menge von 0,0005 bis 0,1 Gew.-%, bevorzugt von 0,001 bis 0,02 Gew.-%, besonders bevorzugt von 0,002 bis 0,01 Gew.-%, jeweils berechnet als Wirksubstanz Zinn(II)-chlorid bezogen auf das Gesamtgewicht der Reaktionspartner A1), A2), B1) und B2) eingesetzt wird.

14. Alkoxysilangruppen enthaltende Polyurethane und/oder Polyurethanharnstoffe, hergestellt nach einem Verfahren der Ansprüche 1 bis 13.

15. Verwendung der Alkoxysilangruppen enthaltenden Polyurethane und/oder Polyurethanharnstoffe nach Anspruch 14 als Bindemittel für Lack-, Dichtstoff- oder Klebstoffrohstoffe.
